# EUROPÄISCHE PATENTANMELDUNG

(11) **EP 2 871 020 A1**
(43) Veröffentlichungstag der Anmeldung: **13.05.2015**
(21) Anmeldenummer: 13192326.0
(22) Anmeldetag: 11.11.2013
(51) Int. Cl.: B23K 26/28, B23K 26/32, B23K 26/30, B23K 33/00

(54) **Schweißen von zwei Teilen aneinander und daraus resultierende Komponente**

(71) Anmelder: Siemens Aktiengesellschaft, 80333 München (DE)
(72) Erfinder: Arjakine, Nikolai, 10555 Berlin (DE); Burbaum, Dr. Bernd, 14612 Falkensee (DE)

(57) **Zusammenfassung**

Bei dem Verbinden mittels Schweißen von Teilen (4, 7) wird die Verbindungsfläche (10) so ausgebildet und angeschweißt, dass Druckspannungen nach dem Verschweißen der Teile (4, 7) miteinander entstehen.

## Beschreibung

Die Erfindung betrifft ein Schweißverfahren, bei dem zwei Teile zu einer Komponente zusammengeschweißt werden.

Oftmals ist es notwendig, verschiedene Werkstoffe miteinander zu verbinden, auch wenn diese verschiedene Ausdehnungskoeffizienten aufweisen.
Als Verbindungsverfahren wird oft ein Schweißverfahren verwendet.

Jedoch kommt es in der Verbindungsschweißung oft zu Rissen, insbesondere dann, wenn die Komponente mit den zwei verschiedenen Teilen sich erwärmt und die Komponenten verschiedene Ausdehnungskoeffizienten aufweisen.

Es ist daher Aufgabe der Erfindung, ein Verfahren aufzuzeigen, bei dem dieses Problem überwunden wird.

Die Aufgabe wird gelöst durch ein Verfahren gemäß Anspruch 1 und eine Komponente gemäß Anspruch 8.

In den Unteransprüchen sind weitere vorteilhafte Maßnahmen aufgelistet, die beliebig miteinander kombiniert werden können, um weitere Vorteile zu erzielen.

Der Vorteil des Verfahrens und der Komponente ist die einfache Herstellung sowie eine riss freie Verbindung auch während des Einsatzes und eine Komponente mit einer riss freien Verbindung.

Es zeigen:
- Figur 1: die Ausgangssituation vor dem Verbinden,
- Figur 2, 3: Schritte des erfindungsgemäßen Verfahrens.

Die Figuren und die Beschreibung stellen nur Ausführungsbeispiele der Erfindung dar.

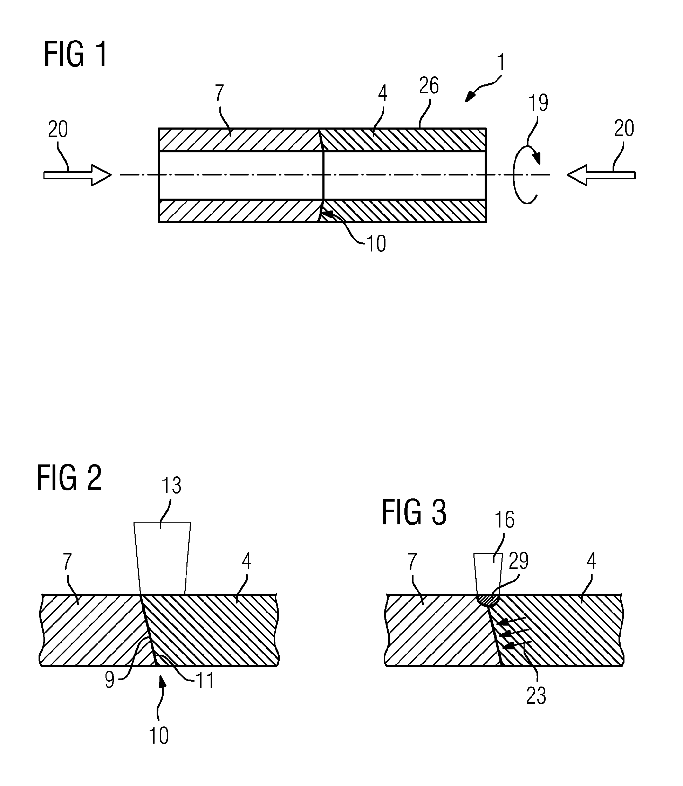

Figur 1 zeigt eine herzustellende Komponente 1 aus einem ersten Teil 4 und einem zweiten Teil 7.

Die Teile 4, 7 weisen verschiedene Materialien auf und auch verschiedene thermische Ausdehnungskoeffizienten. Insbesondere weist das erste Teil 4 einen höheren thermischen Ausdehnungskoeffizienten, insbesondere einen mindestens 20%, ganz insbesondere mindestens 40% höheren Ausdehnungskoeffizienten auf.
Die Teile 4, 7 sind vorzugsweise länglich, wie z.B. Stäbe oder ganz vorzugsweise Rohre (Figur 1).

Eine Verbindungsfläche 10 zwischen den Teilen 4, 7 ist gegenüber der Oberfläche 26 der Teile 4, 7 schräg angestellt.

Das zweite Teil 7 mit dem niedrigeren Ausdehnungskoeffizienten ist an seiner Stirnfläche 11, die den einen Teil der Verbindungsfläche 10 darstellt, nach außen hin abgeschrägt und dementsprechend ist die Stirnfläche 9 des ersten Teils 4 zum Innern hin vertieft ausgebildet. Die Stirnflächen 9, 11 sind vorzugsweise komplementär zueinander ausgebildet. Insbesondere stellt die Verbindungsfläche 10 an einer Stelle eine schräg verlaufende Ebene gegenüber der Oberfläche 26 der Komponente 1 dar, d.h. der Schnittwinkel ist von 90° verschieden der Teile 4, 7, beträgt insbesondere 88° oder weniger.

Insbesondere unter Krafteinwirkung 20 auf beide Teile 4, 7 in Längsrichtung, insbesondere von den beiden Enden her und insbesondere durch eine Drehbewegung 19 wird das erste Teil 4 mit dem höheren Ausdehnungskoeffizienten entlang der Verbindungsfläche 10 vorgewärmt.
Dies kann mit einem energiereichen Strahl 13 wie einem Plasmastrahl oder einem defokussierten Laserstrahl 13 erfolgen. Dadurch dehnt sich das erste Teil 4 stärker aus.

Nach dem Vorwärmen findet ein Schweißen der Verbindungsfläche 10 mit Hilfe eines energiereichen Strahls 16, insbesondere eines Laserstrahls 16 statt, so dass eine Schweißstelle 29, insbesondere umlaufend, ganz insbesondere vollständig umlaufend erzeugt wird. Dies erfolgt auch vorzugsweise unter axialer Krafteinwirkung 20.

Wie durch die Pfeile 23 angedeutet, entstehen so unter der Verbindungsfläche 10 Druckspannungen, die ein weiteres Entstehen von Rissen vermeiden.

## Patentansprüche

1. Verfahren
zum Verbinden von einem ersten Teil (4) und einem zweiten Teil (7),
insbesondere von länglichen Teilen (4, 7),
zu einer Komponente (1),
wobei die Teile (4, 7) deutlich verschiedene thermische Ausdehnungskoeffizienten aufweisen,
insbesondere um mindestens 20% verschieden sind,
ganz insbesondere um mindestens 40% verschiedene thermische Ausdehnungskoeffizienten aufweisen,
bei dem eine Verbindungsfläche (10) zwischen den Teilen (4, 7) abgeschrägt wird und
Schweißen der Verbindungsfläche (10).

2. Verfahren nach Anspruch 1,
bei dem eine Ebene durch die Verbindungsfläche (10) unter einem von 90° verschiedenen Winkel zur Oberfläche (26) der Teile (4, 7) verläuft,
insbesondere unter einem Winkel von 88° oder weniger.

3. Verfahren nach einem oder beiden der Ansprüche 1 oder 2,
bei dem das erste Teil (4) mit dem höheren Ausdehnungskoeffizienten im Bereich der Verbindungsfläche (10) vorgewärmt wird,
insbesondere durch Laserbestrahlung des ersten Teils (4), ganz insbesondere nur durch direktes Vorwärmen des ersten Teils (4).

4. Verfahren nach Anspruch 3,
bei dem ein defokussierter Energiestrahl (13), insbesondere Laserstrahl (13),
zur Erwärmung des ersten Teils (4) verwendet wird.

5. Verfahren nach einem oder beiden der Ansprüche 3 oder 4, bei dem das Vorwärmen entlang der gesamten Verbindungsfläche (10) erfolgt.

6. Verfahren nach einem oder mehreren der Ansprüche 1, 2, 3 oder 5,
bei dem ein Laserstrahl (16) als energiereicher Strahl zum Schweißen verwendet wird.

7. Verfahren nach einem oder mehreren der vorhergehenden Ansprüche,
bei dem die Teile (4, 7) mittels einer Kraft (20) gegeneinander angedrückt werden und
insbesondere gegenüber dem energiereichen Strahl (13, 16) verdreht werden.

8. Komponente (1),
aufweisend
zwei Teile (4, 7),
die miteinander verschweißt sind,
wobei eine Verbindungsfläche (10) zwischen den beiden Teilen (4, 7) unter einem von 90° verschiedenen Winkel zur Oberfläche (26) verläuft.

9. Komponente nach Anspruch 8,
bei dem die Komponente (1) und die Teile (4, 7) länglich sind,
insbesondere Rohre darstellen.

10. Verfahren oder Bauteil nach einem oder mehreren der vorhergehenden Ansprüche,
bei dem das erste Teil (4) mit dem höheren thermischen Ausdehnungskoeffizienten an der Verbindungsfläche (10) zum Innern hin vertieft ausgebildet ist.

11. Verfahren oder Bauteil nach einem oder mehreren der vorhergehenden Ansprüche,
bei dem das zweite Teil (7) mit dem niedrigeren thermischen Ausdehnungskoeffizienten an der Verbindungsfläche (10) nach außen hin gewölbt ist.
